(19)

**Europäisches Patentamt**

**European Patent Office**

**Office européen des brevets**

(11) **EP 4 450 542 A1**

(12) **EUROPEAN PATENT APPLICATION**

(43) Date of publication:
23.10.2024 Bulletin 2024/43

(21) Application number: 24168382.0

(22) Date of filing: 04.04.2024

(51) International Patent Classification (IPC):
*C08J 5/18* (2006.01)    *C08L 67/04* (2006.01)

(52) Cooperative Patent Classification (CPC):
(C-Sets available)
**C08L 67/04; C08J 5/18;** C08L 2205/03    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 18.04.2023 KR 20230050530

(71) Applicant: SK Innovation Co., Ltd.
**Seoul 03188 (KR)**

(72) Inventors:
• **LEE, Sang Yeup**
**34124 Daejeon (KR)**
• **KIM, Do Young**
**34124 Daejeon (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **POLY(GLYCOLIC ACID)-CONTAINING RESIN COMPOSITION AND FILM INCLUDING THE SAME**

(57) The present invention relates to a poly(glycolic acid)-containing resin composition, which includes a poly(glycolic acid), an ethylene-(meth)acrylic polymer and an ethylene-based terpolymer. The present invention further relates to a film including the poly(glycolic acid)-containing resin composition. The poly(glycolic acid)-containing resin composition and the film can be widely applied in the field of green technologies such as a biodegradable resin, a biodegradable food packaging film, a biodegradable sanitary product, and other biodegradable plastics.

EP 4 450 542 A1

(52) Cooperative Patent Classification (CPC): (Cont.)

C-Sets
**C08L 67/04, C08L 23/0869, C08L 23/0884**

**Description**

BACKGROUND

1. Field

The present invention relates to a poly(glycolic acid)-containing resin composition and a film including the same.

2. Description of the Related Art

A biodegradable resin is a resin that can be decomposed by other organic organisms such as bacteria and microorganisms. As environmental pollutions by conventional non-degradable polymers are increasing, demands for the biodegradable resin as a substitute for the non-degradable resin are also increasing. Additionally, the biodegradable resin has recently been used in various industrial fields such as a packaging industry, an electronic industry, an automobile industry, a building material industry, a marine industry, a stationery industry, a pulp/paper industry, etc.

Examples of the biodegradable resins include poly(glycolic acid) (PGA), poly(butylene succinate) (PBS), polyhydroxyalkanoate (PHA), polylactic acid (PLA), etc. PGA may be synthesized by a polymerization of glycolic acid. PGA may have enhanced biodegradability and may have high gas barrier properties by a linear resin structure.

Additionally, the PGA resin has an internal ester bond to have a high crystallinity, thereby providing improved mechanical strength and high brittleness.

However, the PGA resin has a high melting point and a low melt strength, and may be easily decomposed by heat and moisture. Accordingly, a film including the PGA resin may not be easily formed.

SUMMARY

The present invention aims to provide a poly(glycolic acid)-containing resin composition providing improved barrier properties.

The present invention further aims to provide a film formed from the resin composition and providing improved barrier properties.

Against this background, the present invention proposes a poly(glycolic acid)-containing resin composition, which includes a poly(glycolic acid), an ethylene-(meth)acrylic polymer and an ethylene-based terpolymer.

In some embodiments, the ethylene-(meth)acrylic polymer includes a copolymer of ethylene and an alkyl (meth)acrylate monomer.

In some embodiments, the ethylene-(meth)acrylic polymer may include a copolymer of ethylene and (meth)acrylic acid.

In some embodiments, the ethylene-based terpolymer may include a copolymer of ethylene, glycidyl methacrylate and an alkyl acrylate.

In some embodiments, a content of the poly(glycolic acid) may be in a range from 60 wt% to 98 wt% based on a total weight of the poly(glycolic acid)-containing resin composition.

In some embodiments, a content of the ethylene-(meth)acrylic polymer may be in a range from 1 wt% to 39 wt% based on a total weight of the poly(glycolic acid)-containing resin composition.

In some embodiments, a content of the ethylene-based terpolymer may be in a range from 1 wt% to 39 wt% based on a total weight of the poly(glycolic acid)-containing resin composition.

In some embodiments, a content of the poly(glycolic acid) may be greater than a sum of a content of the ethylene-(meth)acrylic polymer and a content of the ethylene-based terpolymer based on a total weight of the poly(glycolic acid)-containing resin composition.

In some embodiments, the poly(glycolic acid)-containing resin composition may have a melt viscosity of 200 Pa·s to 10,000 Pa·s measured under conditions of 230°C, a 5% strain and a frequency of 0.1 Hz (ARES (advanced rheometric expansion system) with oscillatory frequency sweep test method).

In some embodiments, the poly(glycolic acid)-containing resin composition may have a melt flow index of 1 g/10 min to 200 g/10 min measured at 230° C and a load of 2.16 kg (ASTM D1238).

A film formed from the poly(glycolic acid)-containing resin composition according to the above-described embodiments is provided.

In some embodiments, a thickness of the film may be in a range from of 50 $\mu$m to 250 $\mu$m.

In some embodiments, an oxygen permeability measured according to ASTM D3985 at a relative humidity of 50% and 25°C of the film may be 200 g/m$^2$·day or less.

In some embodiments, an oxygen permeability measured according to ASTM D3985 at a relative humidity of 50% and 25°C of the film satisfies Formula 1.

[Formula 1]

$$OTR(PGA\text{-}Poly) \; < \; 0.1(x \cdot OTR(PGA) + (1\text{-}x) \cdot OTR(Poly))$$

In Formula 1, OTR(PGA-Poly) is an oxygen permeability of the film formed from the poly(glycolic acid)-containing resin composition, OTR(PGA) is an oxygen permeability of a film containing only poly(glycolic acid), OTR(Poly) is an oxygen permeability of a film containing a resin that includes only the ethylene-(meth)acrylic polymer or the ethylene-based ternary copolymer, and x is $0.6 \leq x < 1$.

A poly(glycolic acid)-containing resin composition according to embodiments of the present invention may include poly(glycolic acid) (PGA), an ethylene-(meth)acrylic polymer and an ethylene-based ternary copolymer. Accordingly, the poly(glycolic acid)-containing resin composition may have an increased molecular weight and may have improved impact resistance. Additionally, the polyglycolic acid-containing resin composition may have a low melt flow index to have improved film-forming properties.

The poly(glycolic acid)-containing resin composition may contain PGA in a predetermined amount. Accordingly, biodegradable and gas barrier properties of a film including the poly(glycolic acid)-containing resin composition may be improved, and processability may also be improved.

The present invention, against the background above, further proposes a film including the poly(glycolic acid)-containing resin composition according to the invention. Accordingly, a gas permeation path at an inside of the film may become complex, and a gas permeability may be reduced.

The poly(glycolic acid)-containing resin composition and the film of the present invention may be widely applied in the field of green technologies such as a biodegradable resin, a biodegradable food packaging film, a biodegradable sanitary product, and other biodegradable plastics to which a biodegradable composition may be used. The poly(glycolic acid)-containing resin composition and the film of the present invention may suppress earth pollution, water pollution, air pollution, etc., and may be used in eco-friendly materials such as eco-friendly disposable products.

BRIEF DESCRIPTION OF THE DRAWINGS

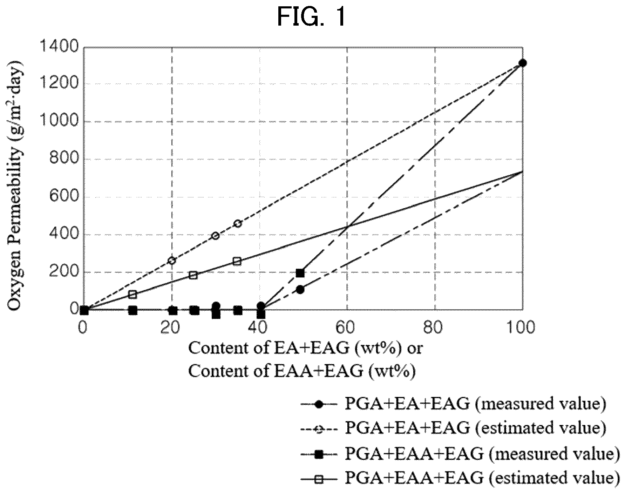

FIG. 1 is a graph showing measured values of oxygen permeability and estimated values of oxygen permeability of a film in accordance with example embodiments.

DETAILED DESCRIPTION OF THE EMBODIMENTS

Embodiments of the present invention provide a poly(glycolic acid)-containing resin composition and a film formed from the poly(glycolic acid)-containing resin composition.

Hereinafter, embodiments of the present invention will be described in detail with reference to the accompanying drawings.

According to embodiments, the poly(glycolic acid)-containing resin composition may include a poly(glycolic acid) (PGA), an ethylene-(meth)acrylic polymer and an ethylene-based ternary copolymer.

The PGA is a biodegradable polymer having a linear structure with an ester bond, and may have high biodegradability. Additionally, the PGA may have high crystallinity by a hydrogen bonding between PGA polymers. Accordingly, gas barrier properties of the poly(glycolic acid)-containing resin composition may be improved.

A carboxyl group or an acrylate group of the ethylene-(meth)acrylic polymer may form a hydrogen bond or interact electrostatically with a carboxyl group and/or a hydroxy group formed by decomposition of an ester group located in the middle of a polymer chain of the PGA, or with a carboxyl group and/or a hydroxy group located at a terminal polymer chain of the PGA. Accordingly, mechanical strength and impact strength of the poly(glycolic acid)-containing resin composition may be improved.

The ethylene-based ternary copolymer may be obtained by copolymerizing three basic monomers including a monomer derived from ethylene. The ethylene-based terpolymer may be cross-linked with the carboxyl group and/or the hydroxy group at the terminal of the PGA. Additionally, the ethylene-based terpolymer may be cross-linked with the carboxyl group and/or the hydroxy groups formed by decomposition of the ester group located in the middle of the polymer chain of the PGA. Accordingly, a molecular weight of the poly(glycolic acid)-containing resin composition may be increased to enhance melt strength and durability.

In some embodiments, the ethylene-(meth)acrylic polymer may include at least one of a copolymer of ethylene and an alkyl (meth)acrylate monomer (EA) and a copolymer of ethylene and (meth)acrylic acid (EAA).

For example, EA or EAA may be used individually as the ethylene-(meth)acrylic polymer. For example, EA and EAA may be used together as the ethylene-(meth)acrylic polymer.

An acrylate group of EA or a carboxyl group of EAA may form a hydrogen bond or interact electrostatically with the carboxyl group and/or the hydroxy group formed by decomposition of the ester group located in the middle of the polymer chain of PGA, or with the carboxyl group and/or the hydroxy group located at the terminal of the chain. Accordingly, mechanical strength and impact strength of the poly(glycolic acid)-containing resin composition may be improved.

In an embodiment, a content of units derived from an ethylene monomer based on a total weight of EA may be in a range from 50 weight percent (wt%) to 90 wt%, from 55 wt% to 85 wt%, or from 60 wt% to 80 wt%. A content of units derived from the alkyl (meth)acrylate monomer based on the total weight of EA may be in a range from 10 wt% to 50 wt%, from 15 wt% to 45 wt%, or from 20 wt% to 40 wt%.

In an embodiment, a content of units derived from an ethylene monomer based on a total weight of EAA may be in a range from 70 wt% to 99 wt%, from 73 wt% to 95 wt%, or from 78 wt% to 90 wt%. A content of units derived from the (meth)acrylic acid monomer based on a total weight of EAA may be in a range from 1 wt% to 30 wt%, from 5 wt% to 27 wt%, or from 10 wt% to 22 wt%.

In some embodiments, the ethylene-based terpolymer may include a copolymer of ethylene, glycidyl methacrylate and an alkyl acrylate (EAG).

EAG is an ethylene-based polymer containing a glycidyl group, and the glycidyl group of EAG may be included in the poly(glycolic acid)-containing resin composition to be bonded to at least one carboxyl group of the PGA and the ethylene-(meth)acrylic polymer.

Accordingly, the poly(glycolic acid)-containing resin composition may be extended, and the polymer structure may become complex. Accordingly, melt strength and durability of the poly(glycolic acid)-containing resin composition may be improved, and a processibility may be improved.

In an embodiment, a content of an ethylene monomer in EAG may be in a range from 48 wt% to 90 wt%, from 52 wt% to 85 wt%, or from 55 wt% to 80 wt%.

In an embodiment, a content of a glycidyl methacrylate monomer in EAG may be in a range from 1 wt% to 30 wt%, from 3 wt% to 25 wt%, or from 5 wt% to 20 wt%.

In an embodiment, a content of an alkyl acrylate monomer in EAG may be in a range from 8 wt% to 50 wt%, from 12 wt% to 45 wt%, or from 15 wt% to 45 wt%.

In some embodiments, a content of the PGA may be in a range from 60 wt% to 98 wt%, from 60 wt% to 93 wt%, from 60 wt% to 88 wt%, or from 65 wt% to 85 wt% based on a total weight of the poly(glycolic acid)-containing resin composition.

Within the above content range, the PGA may be distributed entirely throughout the poly(glycolic acid)-containing resin composition. Accordingly, the poly(glycolic acid)-containing resin composition may have improved melt strength, durability and processability while maintaining low a gas permeability. Additionally, biodegradability of the poly(glycolic acid)-containing resin composition may be improved by the PGA.

In some embodiments, a content of the ethylene-(meth)acrylic polymer may be in a range from 1 wt% to 39 wt%, from 5 wt% to 38 wt%, from 7 wt% to 30 wt%, or from 8 wt% to 20 wt%, based on the total weight of the poly(glycolic acid)-containing resin composition.

In an embodiment, in the case that EA and EAA are used together as the ethylene-(meth)acrylic polymer, each content of EA and EAA may be 1 wt% or more based on the total weight of the poly(glycolic acid)-containing resin composition. For example, the content of EA and the content of EAA may each be in a range from 1 wt% to 39 wt%, from 10 wt% to 39 wt%, from 10 wt% to 35 wt%, or from 10 wt% to 20 wt% based on the total weight of the poly(glycolic acid)-containing resin composition.

In the case that EA and EAA re used together as the ethylene-(meth)acrylic polymer, a sum of EA content and EAA content may be in a range from 2 wt% to 39 wt%, from 10 wt% to 39 wt%, from 10 wt% to 35 wt% by weight, or 10 wt% to 30 wt%.

Within the above range, the PGA can be uniformly distributed in the poly(glycolic acid)-containing resin composition while preventing an increase of the gas permeability due to an increase of the ethylene-(meth)acrylic polymer and a decrease of the PGA. Accordingly, durability of the poly(glycolic acid)-containing resin composition may be improved, and the polymer structure may be prevented from being collapsed due to high biodegradability of the poly(glycolic acid)-containing resin composition. Thus, structural stability of the poly(glycolic acid)-containing resin composition may be enhanced.

In some embodiments, a content of the ethylene-based ternary copolymer (e.g., EAG) may be in a range from 1 wt% to 39 wt%, from 1 wt% to 38 wt%, from 2 wt% to 35 wt%, from 2 wt% to 33 wt%, from 5 wt% to 33 wt%, or from 7 wt% to 27 wt% based on the total weight of the poly(glycolic acid)-containing resin composition.

Within the above content range, the ethylene-based ternary copolymer (e.g., EAG) may be stably cross-linked with the PGA and the ethylene-(meth)acrylic polymer. Thus, melt strength and processability of the poly(glycolic acid)-containing resin composition may be further improved.

In an embodiment, a sum of the content of the ethylene-(meth)acrylic polymer and the content of the ethylene-based ternary copolymer may be in a range from 2 wt% to 40 wt%, from 3 wt% to 40 wt%, from 10 wt% to 40 wt%, from 10 wt% to 35 wt%, based on the total weight of the poly(glycolic acid)-containing resin composition.

Within the above content range, a content of the PGA included in the poly(glycolic acid)-containing resin composition may be 60 wt% or more, 65 wt% or more, or 80 wt% or more. Accordingly, biodegradability of the poly(glycolic acid)-containing resin composition may not be deteriorated, and the gas permeability may be reduced and processability may be enhanced.

In some embodiments, the content of the PGA may be greater than the sum of the content of the ethylene-(meth)acrylic polymer and the content of the ethylene-based ternary copolymer. Accordingly, biodegradability, gas barrier properties and durability of the poly(glycolic acid)-containing resin composition may be enhanced.

As described above, the contents of the PGA, the ethylene-(meth)acrylic polymer and the ethylene-based ternary copolymer included in the poly(glycolic acid)-containing resin composition may be controlled so that a melt viscosity and a melt flow index may be adjusted.

In some embodiments, the melt viscosity of the poly(glycolic acid)-containing resin composition may be in a range from 50 Pa s to 10,000 Pa s, from 100 Pa s to 10,000 Pa·s, from 190 Pa s to 10,000 Pa s, from 200 Pa s to 10,000 Pa s, from 200 Pa·s to 8,000 Pa·s, or from 200 Pa s to 6,000 Pa s.

When reference is made to melt viscosity herein, it is understood that the melt viscosity is as measured under an oscillatory frequency sweep test method of ARES (advanced rheometric expansion system) at a strain of 5% and a frequency of 0.1Hz of a sample prepared by pressing the poly(glycolic acid)-containing resin composition to a thickness of 2 mm at 230°C.

In an embodiment, the melt flow index of the poly(glycolic acid)-containing resin composition may be in a range from 1 g/10min to 200 g/10min, from 1 g/10min to 100 g/10min, and from 2 g/10min to 50 g/10min.

When reference is made to melt flow index herein, it is understood that the melt flow index is as measured at a temperature of 230°C and a load of 2.16 kg according to a standard of ASTM D1238.

The melt viscosity and the melt flow index may be maintained within the above range, a flexibility of the poly(glycolic acid)-containing resin composition may be improved compared to that of the PGA. Thus, processability may be improved in a processing such as a foaming-expansion molding, an injection molding, a compression molding, a casting film molding, an inflation film molding, etc. Accordingly, processability from the poly(glycolic acid)-containing resin composition to a film may be improved.

The above-described polyglycolic acid-containing resin composition may be formed by drying and kneading a mixture of the PGA, the ethylene-(meth)acrylic polymer and the ethylene-based ternary copolymer.

In example embodiments, the PGA, the ethylene-(meth)acrylic polymer and the ethylene-based ternary copolymer may be introduced into a hopper dryer.

The PGA may be introduced and dried in the hopper dryer maintained at a temperature condition, e.g., ranging from 60°C to 100°C, from 70°C to 90°C, or from 75°C to 85°C.

In the case of using EA as the ethylene-(meth)acrylic polymer, the ethylene-(meth)acrylic polymer may be introduced and dried in the hopper dryer maintained at a temperature from 30°C to 70°C, from 40°C to 60°C, or from 45°C to 55°C. In the case of using EAA as the ethylene-(meth)acrylic polymer, the ethylene-(meth)acrylic polymer may be introduced and dried in the hopper dryer maintained at a temperature from 20°C to 60°C, 30°C to 50°C, or 35°C to 45°C.

The ethylene-based terpolymer (e.g., EAG) may be introduced and dried in the hopper dryer maintained at a temperature condition, e.g., ranging from 20°C to 60°C, from 30°C to 50°C, or from 35°C to 45°C.

The PGA, the ethylene-(meth)acrylic polymer and the ethylene-based ternary copolymer may be dried for, e.g., 10 hours to 14 hours, 11 hours to 13 hours, or 11.5 hour to 12.5 hours. In the above range, the PGA, the ethylene-(meth)acrylic polymer and the ethylene-based ternary copolymer may be sufficiently dried to suppress a side reaction in the kneading process of the PGA, the ethylene-(meth)acrylic polymer and the ethylene-based ternary copolymer.

The dried PGA, ethylene-(meth)acrylic polymer and ethylene-based ternary copolymer may be introduced into a chamber of an internal mixer. The chamber of the internal mixer may be maintained at a temperature, e.g., ranging from 220°C to 260°C, from 225°C to 250°C, or from 230°C to 240°C.

When the dried PGA, ethylene-(meth)acrylic polymer and the ethylene-based ternary copolymer are introduced into the internal mixer, a rotor in the internal mixer may be rotated at a rate, e.g., ranging from 10 rpm to 70 rpm, from 20 rpm to 60 rpm, or from 30 rpm to 50 rpm.

Within the above range, the PGA, the ethylene-(meth)acrylic polymer and the ethylene-based ternary copolymer may be kneaded without aggregating with each other.

After the introduction of the dried PGA, ethylene-(meth)acrylic polymer and the ethylene-based ternary copolymer, the kneading may be performed while maintaining the rotor at a rate, e.g., from 60 rpm to 100 rpm, from 70 rpm to 90 rpm, or from 75 rpm to 85 rpm. The kneading may be performed for, e.g., 1 minute to 5 minutes, 2 minutes to 4 minutes, or 2.5 minutes to 3.5 minutes.

In the above range, the PGA, the ethylene-(meth)acrylic polymer and the ethylene-based ternary copolymer may be uniformly distributed and kneaded.

The kneaded product as described above may be recovered to obtain the poly(glycolic acid)-containing resin composition.

Aside from using the internal mixer, the kneading process may also be carried out, for example, by introducing the dried PGA, the ethylene-(meth)acrylic polymer and the ethylene-based ternary copolymer into a uniaxial extruder or a twin-screw extruder, and kneading the melt. The resin composition discharged through an outlet of the uniaxial extruder or the twin-screw extruder may be cut in a pelletizer to obtain the poly(glycolic acid)-containing resin composition in the form of a pellet.

In example embodiments, a film may be formed from the above-described poly(glycolic acid)-containing resin composition. Accordingly, a gas permeability of the film may be reduced, and biodegradability and durability may be improved.

In some embodiments, a thickness of the film may be in a range from 50 $\mu$m to 250 $\mu$m, from 100 $\mu$m to 200 $\mu$m, or from 120 $\mu$m to 180 $\mu$m. In the above range, the gas permeability of the film may be sufficiently reduced.

In an embodiment, the film may have an oxygen permeability of 200g/m$^2$·day or less, 100g/m$^2$·day or less, or 30g/m$^2$·day or less. A lower limit of the oxygen permeability of the film is not limited, but, e.g., the film may have the oxygen permeability of 1g/m$^2$·day or more, 2g/m$^2$·day or more, 5g/m$^2$·day or more, or 10g/ m$^2$·day or more.

When reference is made to oxygen permeability herein, it is understood that the values are as measured according to ASTM D3985 under a relative humidity of 50% and a temperature of 25°C.

In the above range, blocking properties against a gas (e.g., oxygen) may be improved when using the film as a barrier film, and thus a product may be sufficiently protected by the barrier film.

When the PGA is included in an amount of 60 wt% or more in the poly(glycolic acid)-containing resin composition, the PGA may be distributed throughout an entire area of the poly(glycolic acid)-containing resin composition. Accordingly, the gas barrier properties of the film including the poly(glycolic acid)-containing resin composition may be enhanced due to the high gas barrier properties of the PGA.

Thus, the PGA may be included in an amount of 60 wt% or more in the poly(glycolic acid)-containing resin composition, so that the oxygen permeability of the poly(glycolic acid)-containing resin composition may be lowered. For example, the oxygen permeability of the poly(glycolic acid)-containing resin composition may be lower than an arithmetic mean value of oxygen permeabilities of polymer components contained in the poly(glycolic acid)-containing resin composition.

In some embodiments, the oxygen permeability of the film may satisfy Formula 1 below.

[Formula 1]

$$OTR(PGA\text{-}Poly) < 0.1(x \cdot OTR(PGA) + (1\text{-}x) \cdot OTR(Poly))$$

In Formula 1, OTR(PGA-Poly) is an oxygen permeability of the film formed from the poly(glycolic acid)-containing resin composition, OTR(PGA) is an oxygen permeability of a film containing only poly(glycolic acid), OTR(Poly) is an oxygen permeability of a film containing a resin that includes only the ethylene-(meth)acrylic polymer or the ethylene-based ternary copolymer, and x is $0.6 \leq x < 1$.

The film may be provided as, e.g., a barrier film of packaging materials of various products such as a food packaging material, a battery packaging material, etc.

The above-described film may be prepared from the poly(glycolic acid)-containing resin composition.

In example embodiments, the poly(glycolic acid)-containing resin composition may be pressed by applying a pressure to obtain a film.

In some embodiments, a temperature for the press may be maintained in a range from 200°C to 260°C, from 210°C to 250°C, from 220°C to 240°C, or from 225°C to 235°C. In this range, the film including the poly(glycolic acid)-containing resin composition may be molded and transformed.

In some embodiments, the poly(glycolic acid)-containing resin composition may be pressed at a pressure ranging from 10 MPa to 30 MPa, from 15 MPa to 25 MPa, or from 18 MPa to 22 MPa for 1 minute to 3 minutes, or 1.5 minutes to 2.5 minutes.

In the above range, the film may be manufactured to have the above-described thickness. Accordingly, the film having a thin-layered structure may be manufactured while reducing the oxygen permeability.

Alternatively to using a press for the formation of the film, as described above, the poly(glycolic acid)-containing resin composition melted in an extruder may also be extruded from a t-die to a cooling roll, and then cooled to obtain the film (e.g., a casting method). For example, the poly(glycolic acid)-containing resin composition may be cooled by an air contact through an air ring in a ring-shaped die (e.g., a spiral die, etc.) to obtain the film (e.g., a blowing method).

Hereinafter, experimental examples are provided to help understanding of the present invention.

Examples and Comparative Examples

Example 1

(1) Preparation of raw materials for poly(glycolic acid)-containing resin composition

A dried PGA was prepared by drying poly(glycolic acid) for 12 hours in a hopper dryer set at 80°C.
A copolymer of ethylene and acrylic acid (EAA) was prepared as an ethylene-(meth)acrylic polymer, and dried in a hopper dryer set at 50°C for 12 hours. Contents of units derived from an ethylene monomer and units derived from a (meth)acrylic acid monomer based on a total weight of EAA were 90.5 wt% and 9.5 wt%, respectively.
A ternary copolymer (EAG) of ethylene, glycidyl methacrylate and methyl acrylate was dried in a hopper dryer set to 40°C for 12 hours to prepare a dried EAG. Contents of an ethylene monomer, a glycidyl methacrylate monomer and methyl acrylate monomer of EAG were 68 wt%, 8 wt% and 24 wt%, respectively.
A Mitsui hot air dryer was used as the hopper dryer.

(2) Preparation of the poly(glycolic acid)-containing resin composition

The dried PGA, the dried EAA and the dried EAG were introduced into an internal mixer chamber in a ratio of 80 wt%, 10 wt% and 10 wt%, respectively. A temperature at an inside of the internal mixer chamber was maintained at 230°C, and a rotor of the internal mixer was rotated at a rate of 40 rpm.
Thereafter, the rate of the rotor was increased to 80 rpm and kneading was performed for 3 minutes to prepare a poly(glycolic acid)-containing resin composition as a kneading product.
Brabander Majoring Mixer W50 was used as the internal mixer.

(3) Film formation

The poly(glycolic acid)-containing resin composition was pressurized at a pressure of 20 MPa for 2 minutes using a press set at 230°C to prepare a film.

Examples 2 to 14 and Comparative Examples 1 to 5

A copolymer of ethylene and acrylate (EA) was prepared as an ethylene-(meth)acrylic polymer, and dried in a hopper dryer set at 40°C for 12 hours. Contents of units derived from an ethylene monomer and units derived from a methyl acrylate monomer based on a total weight of EA were 71 wt% and 29 wt%, respectively.
Poly(glycolic acid)-containing resin compositions and films of Examples 2 to 14 and Comparative Examples 1 to 5 were prepared by the same methods as those in Example 1, except that types of the PGA and a weight ratio of the dried PGA, the dried ethylene-(meth)acrylic polymer and the dried EAG introduced in the internal mixer chamber were adjusted as shown in Table 1 below.

[Table 1]

| | PGA | | ethylene-(meth)acrylic polymer | | EAG (wt%) |
|---|---|---|---|---|---|
| | Type | content (wt%) | EA (wt%) | EAA | |
| Example 1 | A | 80 | - | 10 | 10 |
| Example 2 | A | 70 | 20 | - | 10 |
| Example 3 | A | 70 | 10 | - | 20 |
| Example 4 | A | 70 | - | 20 | 10 |
| Example 5 | A | 70 | - | 10 | 20 |
| Example 6 | A | 60 | 30 | - | 10 |
| Example 7 | A | 60 | 20 | - | 20 |
| Example 8 | A | 60 | - | 20 | 20 |
| Example 9 | A | 60 | - | 10 | 30 |

(continued)

| | PGA | | ethylene-(meth)acrylic polymer | | EAG (wt%) |
|---|---|---|---|---|---|
| | Type | content (wt%) | EA (wt%) | EAA | |
| Example 10 | A | 65 | - | 30 | 5 |
| Example 11 | A | 65 | 10 | 10 | 15 |
| Example 12 | A | 50 | 25 | - | 25 |
| Example 13 | A | 50 | - | 25 | 25 |
| Example 14 | B | 80 | 5 | - | 15 |
| Comparative Example 1 | A | 100 | - | - | - |
| Comparative Example 2 | A | - | 100 | - | - |
| Comparative Example 3 | A | - | - | 100 | - |
| Comparative Example 4 | A | - | - | - | 100 |
| Comparative Example 5 | B | 100 | - | - | - |

The types of PGA listed in Table 1 are as follows:

A: Poly(glycolic acid) having a number average molecular weight (Mn) of 35,000 to 45,000, and a weight average molecular weight (Mw) of 80,000 to 95,000 measured by Gel Permeation Chromatography (GPC).
B: Poly(glycolic acid) having a number average molecular weight (Mn) of 70,000 to 80,000 and a weight average molecular weight (Mw) of 160,000 to 180,000 measured by Gel Permeation Chromatography (GPC).

The gel permeation chromatography was performed by dissolving poly(glycolic acid) in hexafluoro isopropyl alcohol (HFIP), filtering the solution with a polytetrafluoroethylene (PTFE) filter and injecting into Tooh CoSEC HLC-8320 GPC, and poly(methyl methacrylate) (PMMA) was used as a standard material.

Experimental Example 1

FIG. 1 is a graph showing measured and estimated values of an oxygen permeability of a film according to a sum of the contents of EA and EAG, and a sum of the contents of EAA and EAG contained in the poly(glycolic acid)-containing resin composition.
The estimated value of the oxygen permeability represents an arithmetic average of the oxygen permeability of the PGA, the oxygen permeability of EA, EAA and EAG included in the poly(glycolic acid)-containing resin composition according to the weight ratios thereof.
The measured value of the oxygen permeability represents a measured value of the oxygen permeability of the film including the poly(glycolic acid)-containing resin composition.
The measured values of Examples 3, 7 and 12 were used as measured values of the oxygen permeability of the film containing the poly(glycolic acid)-containing resin composition containing PGA, EA and EAG.
The measured values of Examples 1, 4, 8, 10 and 13 were used as measured values of the oxygen permeability of the film containing the poly(glycolic acid)-containing resin composition containing PGA, EAA and EAG.
Referring to FIG. 1, the estimated value of the oxygen permeability of the film was calculated as being linearly increased according to the sum of the contents of EA and EAG, or the sum of the contents of EAA and EAG.
However, when the sum o of the contents of EA and EAG, or the sum of the contents of EAA and EAG was 40 wt% or less (the content of the PGA was more than 60 wt%), the oxygen permeability was low. Additionally, when the sum of the contents of EA and EAG, or the sum of the contents of EAA and EAG exceeded 40 wt%, the oxygen permeability was measured to increase in proportion to the content.

Experimental Example 2

(1) Measurement of melt viscosity

The poly(glycolic acid)-containing resin composition prepared according to each of Examples and Comparative Examples was pressed to a thickness of 2 mm at a temperature of 230°C, and then a melt viscosity was measured using a viscosity measuring apparatus (TAARES).
The viscosity measuring apparatus was set under conditions of 230°C, 5% strain and a frequency of 0.1 Hz to 400 Hz according to ASTM D3835, and a viscosity value measured at a frequency of 0.1 Hz was designated as a melt viscosity.

(2) Measurement of melt flow index

A melt flow index of each poly(glycolic acid)-containing resin composition prepared according to the above-described Examples and Comparative Examples was measured at a temperature of 230°C and a load of 2.16 kg according to ASTM D1238.

(3) Measurement of oxygen permeability

Each film according to the above-described Examples and Comparative Examples was mounted on an oxygen permeability measuring apparatus (MOCON OX TRANS model 2/61) to measure an oxygen permeability according to ASTM D3985.
The oxygen permeability was measured at a relative humidity of 50% and a temperature of 25°C for 12 hours, and a value at a point where the permeability was stabilized was designated as the oxygen permeability.
A measurable upper limit of the oxygen permeability was 1,300 g/m$^2$·day, and the oxygen permeability of the film which could not be measured beyond the upper limit was marked as 'excess'.
The evaluation results are shown in Table 2 below.

[Table 2]

| | melt viscosity (Pa·s) | melt flow index (g/10min) | oxygen permeability | |
| --- | --- | --- | --- | --- |
| | | | g/m$^2$·day | g·μm/m$^2$·day |
| Example 1 | 197.2 | 163.8 | 0.3 | 57 |
| Example 2 | 344.0 | 129.3 | 0.4 | 84 |
| Example 3 | 669.6 | 63.2 | 0.5 | 80 |
| Example 4 | 230.9 | 158.3 | 0.4 | 60 |
| Example 5 | 632.2 | 65.3 | 0.4 | 72 |
| Example 6 | 474.2 | 104.1 | 35 | 6300 |
| Example 7 | 774.7 | 56.5 | 52 | 8840 |
| Example 8 | 661.6 | 59.2 | 33 | 7260 |
| Example 9 | 2860.0 | 30.9 | 60 | 12600 |
| Example 10 | 202.7 | 157.1 | 1.5 | 285 |
| Example 11 | 436.2 | 115.7 | 4.5 | 810 |
| Example 12 | 1520.2 | 44.7 | 105 | 21000 |
| Example 13 | 1359.8 | 47.2 | 95 | 16200 |
| Example 14 | 5875.9 | 6.4 | 0.4 | 70.5 |
| Comparative Example 1 | 24.8 | 300 | 0.2 | 40 |
| Comparative Example 2 | 4468.9 | 14.2 | 1300 | 292000 |
| Comparative Example 3 | 376.3 | 41.2 | 740 | 166000 |
| Comparative Example 4 | 1732.9 | 11.5 | excess | excess |

(continued)

| | melt viscosity (Pa·s) | melt flow index (g/10min) | oxygen permeability | |
| --- | --- | --- | --- | --- |
| | | | g/m$^2$·day | g·$\mu$m/m$^2$·day |
| Comparative Example 5 | 243.4 | 12.5 | 0.4 | 65.6 |

Referring to Table 2, the films according to Examples provided the oxygen permeability of 200 g/m$^2$·day or less.

In Examples 6 to 9 where the content of the PGA was reduced to 60 wt%, the oxygen permeability was relatively increased.

In Examples 12 and 13 where the content of the PGA content was less than 60 wt%, the oxygen permeability was relatively increased.

In Example 14 where the molecular weight of the PGA was increased, the melt viscosity was relatively increased and the melt flow index was relatively decreased.

In Comparative Example 1 using only the PGA, the melt viscosity of the poly(glycolic acid)-containing resin composition was decreased and the melt flow index was increased.

In Comparative Example 2 using only EA, the oxygen permeability was greater than 200 g/m$^2$·day.

In Comparative Example 3 using only EAA, the oxygen permeability was greater than 200 g/m$^2$·day.

In Comparative Example 4 using only EAG, the oxygen permeability was greater than 1,200 g/m$^2$·day.

**Claims**

1. A poly(glycolic acid)-containing resin composition, comprising:

   a poly(glycolic acid);
   an ethylene-(meth)acrylic polymer; and
   an ethylene-based terpolymer.

2. The poly(glycolic acid)-containing resin composition of claim 1, wherein the ethylene-(meth)acrylic polymer includes a copolymer of ethylene and an alkyl (meth)acrylate monomer.

3. The poly(glycolic acid)-containing resin composition of claims 1 or 2, wherein the ethylene-(meth)acrylic polymer includes a copolymer of ethylene and (meth)acrylic acid.

4. The poly(glycolic acid)-containing resin composition of any claims one of 1 to 3, wherein the ethylene-based terpolymer includes a copolymer of ethylene, glycidyl methacrylate and an alkyl acrylate.

5. The poly(glycolic acid)-containing resin composition of any claims one of 1 to 4, wherein a content of the poly(glycolic acid) is in a range from 60 wt% to 98 wt% based on a total weight of the poly(glycolic acid)-containing resin composition.

6. The poly(glycolic acid)-containing resin composition of any claims one of 1 to 5, wherein a content of the ethylene-(meth)acrylic polymer is in a range from 1 wt% to 39 wt% based on a total weight of the poly(glycolic acid)-containing resin composition.

7. The poly(glycolic acid)-containing resin composition of any claims one of 1 to 6, wherein a content of the ethylene-based terpolymer is in a range from 1 wt% to 39 wt% based on a total weight of the poly(glycolic acid)-containing resin composition.

8. The poly(glycolic acid)-containing resin composition of any claims one of 1 to 7, wherein a content of the poly(glycolic acid) is greater than a sum of a content of the ethylene-(meth)acrylic polymer and a content of the ethylene-based terpolymer based on a total weight of the poly(glycolic acid)-containing resin composition.

9. The poly(glycolic acid)-containing resin composition of any claims one of 1 to 8, wherein the poly(glycolic acid)-containing resin composition has a melt viscosity of 200 Pa·s to 10,000 Pa s measured under conditions of 230°C, a 5% strain and a frequency of 0.1 Hz (ARES with oscillatory frequency sweep test method).

10. The poly(glycolic acid)-containing resin composition of any claims one of 1 to 9, wherein the poly(glycolic acid)-containing resin composition has a melt flow index of 1 g/10 min to 200 g/10 min measured at 230° C and a load of 2.16 kg (ASTM D1238).

11. A film formed from the poly(glycolic acid)-containing resin composition of claims 1 to 10.

12. The film of claim 11, wherein a thickness of the film is in a range from of 50 μm to 250 μm.

13. The film of claim 12, wherein an oxygen permeability measured according to ASTM D3985 at a relative humidity of 50% and 25°C of the film is 200 g/m²·day or less.

14. The film of any claims one of 11 to 13, wherein an oxygen permeability of the film, measured according to ASTM D3985 at a relative humidity of 50% and 25°C, satisfies Formula 1:

[Formula 1]

$$OTR(PGA\text{-}Poly) < 0.1(x \cdot OTR(PGA) + (1\text{-}x) \cdot OTR(Poly))$$

wherein, in Formula 1, OTR(PGA-Poly) is an oxygen permeability of the film formed from the poly(glycolic acid)-containing resin composition, OTR(PGA) is an oxygen permeability of a film containing only poly(glycolic acid), OTR(Poly) is an oxygen permeability of a film containing a resin that includes only the ethylene-(meth)acrylic polymer or the ethylene-based ternary copolymer, and x is $0.6 \leq x < 1$.

## FIG. 1

Europäisches
Patentamt

European
Patent Office

Office européen
des brevets

**EUROPEAN SEARCH REPORT**

Application Number

EP 24 16 8382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/213466 A1 (URADNISHECK JULIUS [US]) 13 September 2007 (2007-09-13) * paragraph [0014]; claims 1-20 * * example 19; table 4 * ----- | 1-14 | INV. C08J5/18 C08L67/04 |
| X | US 2009/191371 A1 (URADNISHECK JULIUS [US]) 30 July 2009 (2009-07-30) * example 16 * * paragraph [0034]; claims 1-20 * ----- | 1-14 | |
| A | US 2011/027590 A1 (ABE SHUNSUKE [JP]) 3 February 2011 (2011-02-03) * claims 1-20 * * Examples * ----- | 1-14 | |
| | | | **TECHNICAL FIELDS SEARCHED (IPC)** C08J C08L |

The present search report has been drawn up for all claims

| Place of search | Date of completion of the search | Examiner |
|---|---|---|
| The Hague | 3 September 2024 | Pouilley, Delphine |

EPO FORM 1503 03.82 (P04C01)

## ANNEX TO THE EUROPEAN SEARCH REPORT
## ON EUROPEAN PATENT APPLICATION NO.

EP 24 16 8382

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2024

| Patent document cited in search report | Publication date | Patent family member(s) | | Publication date |
|---|---|---|---|---|
| US 2007213466 A1 | 13-09-2007 | US | 2007213466 A1 | 13-09-2007 |
| | | WO | 2008030599 A2 | 13-03-2008 |
| US 2009191371 A1 | 30-07-2009 | NONE | | |
| US 2011027590 A1 | 03-02-2011 | CN | 101945749 A | 12-01-2011 |
| | | EP | 2255951 A1 | 01-12-2010 |
| | | JP | 4972012 B2 | 11-07-2012 |
| | | JP | 2009202465 A | 10-09-2009 |
| | | US | 2011027590 A1 | 03-02-2011 |
| | | WO | 2009107425 A1 | 03-09-2009 |

EPO FORM P0459

For more details about this annex : see Official Journal of the European Patent Office, No. 12/82